(19)

Europäisches
Patentamt
European
Patent Office
Office européen
des brevets

(11) **EP 4 099 226 A1**

(12) **EUROPEAN PATENT APPLICATION**

(43) Date of publication:
**07.12.2022 Bulletin 2022/49**

(21) Application number: **21176983.1**

(22) Date of filing: **31.05.2021**

(51) International Patent Classification (IPC):
**G06N 3/04** *(2006.01)*  **G06N 3/08** *(2006.01)*
**B60W 60/00** *(2020.01)*

(52) Cooperative Patent Classification (CPC):
**G06N 3/0454; G06N 3/0445; G06N 3/0472;**
**G06N 3/08; B60W 60/0027**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Toyota-shi, Aichi-ken 471-8571 (JP)**
• **Max-Planck-Institut für Informatik
66123 Saarbrücken (DE)**

(72) Inventors:
• **OLMEDA REINO, Daniel
1140 Brussels (BE)**
• **BHATTACHARYYA, Apratim
66123 Saarbrücken (DE)**
• **FRITZ, Mario
66123 Saarbrücken (DE)**
• **SCHIELE, Bernt
66123 Saarbrücken (DE)**

(74) Representative: **Cabinet Beau de Loménie
158, rue de l'Université
75340 Paris Cedex 07 (FR)**

(54) **TRAINING METHOD FOR TRAINING A CVAE TO PREDICT FUTURE PROPERTIES OF AGENTS, PREDICTION METHOD, COMPUTER PROGRAM(S), COMPUTER READABLE MEDIUM, FUTURE PROPERTIES PREDICTION SYSTEM**

(57)     A training method for training a CVAE to calculate a prediction Y relative to future properties of agent(s) Ai, and a prediction method to calculate such predictions using the CVAE.

The CVAE comprises a posterior (Po), a prior (Pr) and a decoder (D).

Each of the posterior (Po) and the prior (Pr) comprises an encoder (PoE), a sampler (PoS) and an attention mechanism (PoAM,PrAM).

The encoders (PoE,PrE) calculate parameters of conditional distributions of intermediate variables (PoW,PrW), based on past trajectories of the agents.

The attention mechanisms (PoAM,PrAM) output values of the latent space variable Z based on the drawn value of the intermediate variable (PoW,PrW).

The decoder (D) calculates predictions Y based on a value of the latent space variable Z.

Both the posterior distribution $q_\phi(Z|X,Y)$ and the prior distribution $p_\theta(Z|X)$ are joint distributions based on the past observations of the agents.

Computer program(s), readable medium, prediction system and method.

FIG.3

**EP 4 099 226 A1**

**Description**

FIELD OF THE DISCLOSURE

The present disclosure is related to methods and systems to predict properties, such as trajectories, of interacting agents present in a scene, and to methods for training such systems. In the present document, the word 'agents' refers to any objects or element present in a considered scene and which may interact. For instance, the agents can be pedestrians, bicyclists, vehicles, etc., when the scene is an urban environment.

BACKGROUND OF THE DISCLOSURE

Anticipation of the future behaviour of the agents present in their vicinity is a key competence for autonomous vehicles to successfully operate in the real world. Such anticipation task can be formulated as trajectory prediction problem: Given past observations of the different agents present in a scene, the probable future trajectories of these agents are to be predicted.

Recurrent Neural Networks (RNN), especially LSTM (Long short-term memory) formulations, are state-of-the-art models for trajectory prediction tasks, cf. e.g. Refs. [1] and [4] below.

However, it has appeared that existing trajectory prediction systems often fail to correctly predict trajectories when a plurality of agents are present in the scene. That is, these systems seem to insufficiently take into account the interactions that take place between the different agents. Consequently, the trajectories predicted by these systems are sometimes sub-optimal.

The following references disclose various technologies related to future trajectory predictions, or in the field of variational auto-encoders:

[1] A. Alahi, K. Goel, V. Ramanathan, A. Robicquet, L. Fei-Fei, and S. Savarese. Social LSTM: Human trajectory prediction in crowded spaces. In Proceedings of the IEEE Conference on Computer Vision and Pattern Recognition, pages 961-971, 2016.

[2] Irina Higgins, Loïc Matthey, Arka Pal, Christopher Burgess, Xavier Glorot, Matthew Botvinick, Shakir Mohamed, and Alexander Lerchner. Beta-VAE: Learning basic visual concepts with a constrained variational framework. In ICLR, 2017.

[3] Diederik P. Kingma and Max Welling. Auto-encoding variational Bayes. In ICLR, 2014.

[4] N. Lee, W. Choi, P. Vernaza, C. B. Choy, P. H. Torr, and M. Chandraker. Desire: Distant future prediction in dynamic scenes with interacting agents. CVPR, 2017.

[5] Tim Salzmann, Boris Ivanovic, Punarjay Chakravarty, and Marco Pavone. Trajectron++: Multi-agent generative trajectory forecasting with heterogeneous data for control. In ECCV, 2020.

[6] K. Sohn, H. Lee, and X. Yan. Learning structured output representation using deep conditional generative models. In Advances in Neural Information Processing Systems, pages 3483-3491, 2015.

[7] Karen Simonyan and Andrew Zisserman. Very deep convolutional networks for large-scale image recognition. In ICLR, 2015.

[8] Aneja, J., Agrawal, H., Batra, D., & Schwing, A. Sequential Latent Spaces for Modeling the Intention During Diverse Image Captioning. 2019 IEEE/CVF International Conference on Computer Vision (ICCV), 4260-4269.

SUMMARY OF THE DISCLOSURE

In view of the above problem, the main purpose of the present disclosure is to propose methods and systems which can be used to accurately predict future properties of agents present in a scene.

A main application of the present disclosure is for predicting position-related properties of the agents (that is, properties related to the positions of the agents, such as their positions, velocities, etc.). However, the present disclosure can more broadly be applied to the prediction of any individual time-dependent property or characteristic of an agent present in a scene.

Beforehand, a conditional variational autoencoder (or CVAE) which can be used to accurately calculate a prediction Y relative to future properties of agent(s) Ai present in a scene (S), with i=1...n, is defined.

This CVAE comprises a posterior (Po), a prior (Pr) and a decoder (D); the posterior comprising a first encoder (PoE), a first sampler (PoS) and a first attention mechanism (PoAM);

the first encoder (PoE) being configured, based on a past observation X and a prediction Y, to calculate parameters of a distribution of a first intermediate variable (PoW) conditioned by the past observation X and the prediction Y;

the first sampler (PoS) being configured to draw a value of the first intermediate variable (PoW), based on the parameters of the distribution of the first intermediate variable (PoW) calculated by the first encoder (PoE);

the first attention mechanism (PoAM) being configured to output a value of the latent space variable Z based on the drawn value of the first intermediate variable (PoW);

the posterior (Po) being configured so that the latent space variable Z exhibits a posterior distribution $q_\phi(Z|X,Y)$ conditioned by the past observation X and the prediction Y;

the prior (Pr) comprising a second encoder (PrE), a second sampler (PrS) and a second attention mechanism (PrAM); the second encoder (PrE) being configured, based on a past observation X, to calculate parameters of a distribution of a second intermediate variable (PrW) conditioned by the past observation X;

the second sampler (PrS) being configured to draw a value of the second intermediate variable (PrW), based on the parameters of the distribution of the second intermediate variable (PrW) calculated by the second encoder (PrE);

the second attention mechanism (PrAM) being configured to output a value of the latent space variable Z based on the drawn value of the second intermediate variable (PrW);

the prior (Pr) being configured so that the latent space variable Z exhibits a prior distribution $p_\theta(Z|X)$ conditioned by the past observation X and the prediction Y; and

the decoder (D) being configured to calculate a prediction Y based on a value of the latent space variable Z.

Herein, the following notations are used:

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The set of parameters of the posterior (Po) is noted $\phi$, the set of parameters of the prior (Pr) is noted $\theta$, and the set of parameters of the decoder D is noted D.

A denotes the agents present in the scene, and Ai refers to a specific agent of number or rank 'i'.

'i' accordingly is an index which refers to the number or rank of an agent Ai. 'i' varies from 1 to n, n being the total number of agents. The postscript 'i' for a variable therefore indicates that the variable is considered for the agent Ai.

The past observation X, the prediction Y and the latent space variable Z are respectively vectors (xi),(yi),(zi) of per-agent value(s), indexed by i. Accordingly, the following notations can be used interchangeably: For X: X,(xi),(x1,x2,..xn); for Y: Y,(yi),(y1,y2,..yn); for Z: Z,(zi),(z1,z2,..zn).

In addition, usually, each of these values xi, yi or zi is itself a vector of numerical values, in particular for a plurality of time steps, etc.

X is a past observation for agents A. The past information X includes at least, for each agent Ai, property(ies) of the agent at one or more past time point(s). As an example of property(ies), the past information can include for instance the latest available position of each agent (acquired substantially at the considered time point), and (optionally) preferably one or more additional position(s) of the agents, at earlier time points.

The past information may further include additional input(s). Such additional input(s) may include at least one of a velocity, an acceleration, semantic class information (e.g. pedestrian, car, bus), visual information (e.g. image(s)), 2D- and/or 3D- information, relative to the agent(s). For instance, the past observation X may include, for each agent, its past trajectory over the last n time steps (up to the current time step), and visual information showing the context of this past trajectory.

Y is a prediction for the agent(s) A. The prediction Y includes at least one property of agent(s) at future time point(s). This property can include for instance a position, a velocity, an acceleration, a temperature, etc., of agent(s), at future time point(s).

The proposed CVAE can be used to calculate predictions relative to agents present in a scene, which scene is in an urban environment.

More broadly, the methods and systems according to the present disclosure can be implemented to calculate predictions relative to any types of agents interacting in a scene, in any kind of environment (or scene). Accordingly the environment (or scene) can be any scene on, below, or above, the ground or the sea surface; for instance, a scene in which air/sea/submarine/space travel takes place. The environment can also be any industrial/robotic/wildlife environment, etc.

As an example, the property may be a position-related property. In this case, the agents are mobile agents.

For instance, the proposed methods and systems can be used at a tiny scale to predict trajectories of molecules; at very large scale, they can be used to predict the trajectories of planets or celestial objects; etc. Generally, they can be applied to obtain information on any environment in which multiple agents interacting with each other are present.

According to the present disclosure, the property or properties can be any individual, time-dependent characteristic(s) of an agent: For instance, its position, velocity, acceleration, pose, temperature (for molecules which interact), etc. This property or these properties is/are preferably of course property or properties which vary due to the interactions between the agents.

The CVAE further has the following specific features:

In order to encode a rich latent space which captures the effect of the interactions between the different agents Ai, the posterior distribution $q_\phi(Z|X,Y)$ is a joint function, jointly calculated for a plurality of agents in the scene. Indeed, this function is defined in that it auto-regressively factorizes, that is, the posterior distribution $q_\phi(Z|X,Y)$ decomposes as a product of per-agent distributions $q_\phi(z_i | Z_{<i},X,Y)$ based on the equation:

$$q_\Phi(Z|X,Y) = \prod_{i=1}^{n} q_\Phi(z_i | Z_{<i}, Y, X) \quad (1)$$

where $q_\phi(z_i|Z_{<i},Y,X)$ is a probabilistic distribution of the latent space variable $z_i$ related to agent Ai, conditioned by the latent space variables $Z_{<i}$, the prediction Y, and the past observation X.

The notation $U_{<i}$, where U can be X, Y or Z, and U=(ui), denotes herein the values uj for j=1... i-1.

The prior distribution $p_\theta(Z|X)$ decomposes as a product of per-agent prior distributions $p_\theta(z_i|Z_{<i},Y_{<i}, X)$ based on the equation:

$$p_\theta(Z|X) = \prod_{i=1}^{n} p_\theta(z_i | Z_{<i}, Y_{<i}, X) \quad (2)$$

where $p_\theta(z_i|Z_{<i},Y_{<i},X)$ is a probabilistic distribution of the latent space variable $z_i$ related to agent Ai, conditioned by the latent space variables $Z_{<i}$, the predictions $Y_{<i}$, and the past observation X.

Here it must be noted that in prior embodiments by contrast, the conditional distributions $p_\theta(y_i|X)$ parameterized by $\theta$ of the future trajectories yi are modelled using the latent variables zi in the standard conditional VAE formulation as follows (See Ref.[5]):

$$p_\theta(y_i|X) = \int p_\theta(y_i|z_i, X) p_\theta(z_i|x_i) dz_i \quad (3)$$

In such embodiments, the distribution $p_\theta(z_i|x_i)$ assumes conditional independence of the latent variables zi, given the past observation $x_i$ of each agent. This assumption essentially ignores the motion patterns of interacting agents, for instance between the vehicles and other road users (pedestrians, bicyclists,..) in the case of an urban scene. However, in real world dense urban scenarios, it has been found critical to take into account such interactions for the accurate prediction of future trajectories. The formulation in Eq. (3) limits the amount of interactions between the agents that can be encoded in the latent space. Since, the latent variables z i are crucial for capturing diverse futures in such conditional models, it is important to express the effect of interactions in the latent space.

Accordingly, in contrast to prior conditional VAE based models, the proposed CVAE encodes the joint distribution of the latent variables across all agents in the scene. This allows the proposed CVAE to encode the dependence of the future trajectory distribution on interacting agents in the latent space, leading to more accurate estimations of the predictions (in particular, future trajectories) relative to the agents.

In addition, each of the first and the second attention mechanisms is configured to infer the per-agent value(s) zi of the latent space variable Z based on the per-agent latent space variable(s) $Z_{<i}$ and the drawn value of the intermediate variable (respectively the first intermediate variable PoW and the second intermediate variable PrW transmitted to the attention mechanism.

An attention mechanism which can be used as a basis to implement the first and/or the second attention mechanism PoAM,PrAM is for instance described by Ref.[8].

In order to meet the above-mentioned purpose of accurately calculating future property(ies) and more broadly, predictions, relative to agents present in a scene, the following training method is proposed for training the conditional variational auto-encoder model, CVAE.

The method comprises iteratively training the posterior (Po), the prior (Pr) and the decoder (D). Advantageously, these elements can possibly be trained at the same time.

Preferably, this training is performed so as to maximize a loss function L which maximizes a likelihood of training data ($Y_{actual}$) under parameters of the CVAE ($\theta,\Phi$) while minimizing term(s) representative of a divergence between the prior distribution $p_\theta(Y,Z|X)$ and the posterior distribution $q_\phi(Z|X,Y)$.

In particular, in some embodiments the loss function L includes a difference L1 defined by:

$$L1 = \sum_i E_{q\Phi} log(p_\theta(y_i|Z_{\leq i}, Y_{<i}, X) - \beta \sum_i D_{KL}(q_\Phi(z_i|Z_{<i}, X, Y) \parallel p_\theta(z_i|Z_{<i}, X))$$

In addition, in order for the CVAE to estimate the predictions relative to the agents even more precisely, some or all of the following features may be further adopted.

The posterior may be configured so that the per-agent posterior distributions $q_\phi(z_i|Z<i,Y,X)$ be normal distributions whose mean and variances are functions of $Z_{<i}$, X and Y.

The posterior may be configured so that the parameters of the distribution of the first and/or the second intermediate variable (PoW,PrW) include expected values and variances of Gaussian variables.

The CVAE may be configured so that none of the per-agent prior distributions $p_\theta(zi|X)$ is conditioned on any prediction value $y_i$.

The encoder(s) and/or the decoder (D) may include a recurrent neural network, the recurrent neural network being for instance a gated recurrent unit (GRU) or a Long-Short-Term Memory module (LSTM).

The posterior distribution $q\phi(Z|X,Y)$ and the prior distribution $p_\theta(Z|X)$ are configured so that the latent space variable Z is a Gaussian variable.

A prediction method for accurately calculating a prediction Y is further proposed.

This method comprises:

storing, in a memory, a prior (Pr) and a decoder (D) of a prediction model CVAE trained with the above-defined training method;

inputting a past observation X to the prior (Pr);

based on the past observation X, calculating parameters of a distribution of the second intermediate variable (PrW), using the encoder (PrE) of the prior (Pr);

drawing a value of the second intermediate variable (PrW), based on the parameters of the distribution of the second intermediate variable (PrW);

calculating a value of the latent space variable Z based on the drawn value of the second intermediate variable (PrW), using the attention mechanism (PrAM) of the prior (Pr);

calculating the prediction Y based on said value of the latent space variable Z, using the decoder D.

In particular implementations, the proposed method is determined by computer program instructions.

Accordingly, another purpose the present disclosure is to propose one or more computer program(s) comprising instructions which, when the instructions are executed by a computer, cause the computer to carry out the steps of the above-defined training method or the above-defined prediction method, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes an object information calculation system for obtaining confirmed object information relative to object(s) on the basis of a plurality of detections of the object(s); the object information calculation system comprising one or more processors and a computer-readable medium; the computer-readable medium comprising computer instructions stored therein, wherein the instructions, when executed by the one or more processors, cause the one or more processors to carry out the steps of one of the above-defined object information calculation methods.

The present disclosure also includes a prediction system for calculating a prediction Y relative to future property(ies) of agent(s) Ai present in a scene, with i=1...n, the prediction system comprising one or more processors and a computer-readable medium; the computer-readable medium comprising computer instructions stored therein, wherein the instructions, when executed by the one or more processors, cause the one or more processors to carry out the steps of the above-defined prediction method.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 is a schematic representation of a scene S in which a vehicle is moving, the vehicle being equipped with a prediction system according to the present disclosure;

Fig. 2 is a schematic top view of a scene in which the vehicle of Fig.1 is moving;

Fig. 3 shows a schematic representation of a CVAE according to the present disclosure, in a first embodiment; and

Fig. 4 shows a schematic representation of a CVAE according to the present disclosure, in a second embodiment.

DESCRIPTION OF THE EMBODIMENTS

Reference will now be made in detail to prediction systems PS constituting exemplary embodiments of the present disclosure.

These systems PS are prediction systems for predicting position-related properties of agents present in a scene, that is, essentially to predict their future positions, velocities, etc. Although this example concerns the prediction of position-related properties, the present disclosure can be applied to the prediction of any individual time-dependent property or characteristic of agent(s) present in a scene.

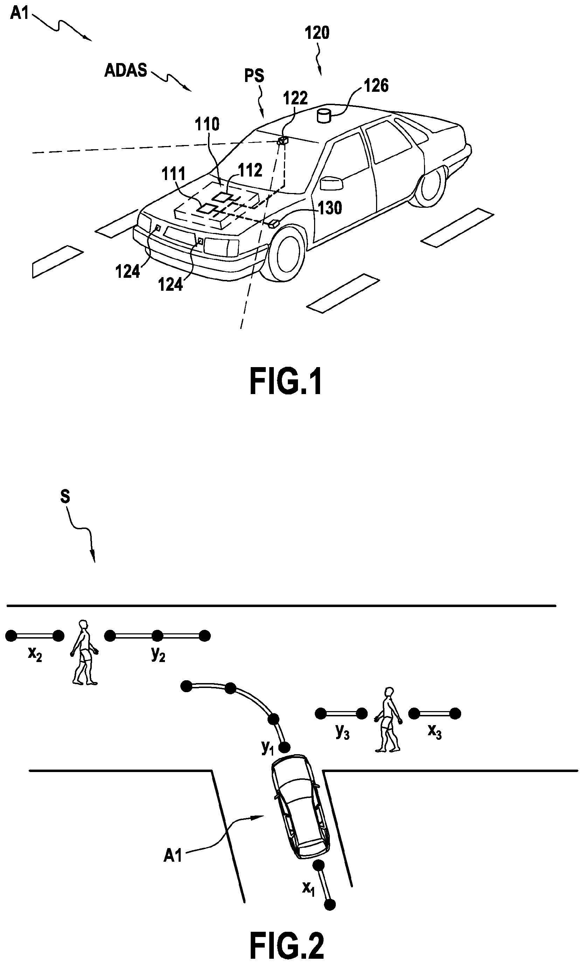

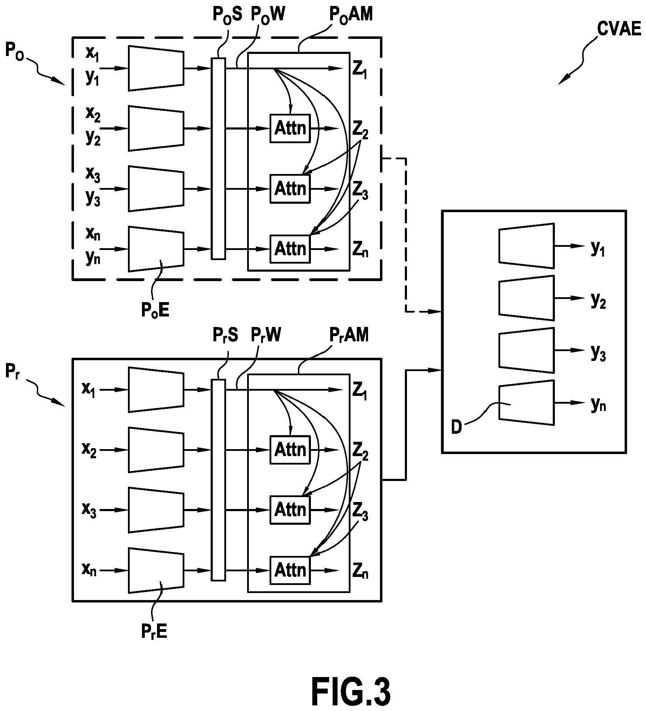

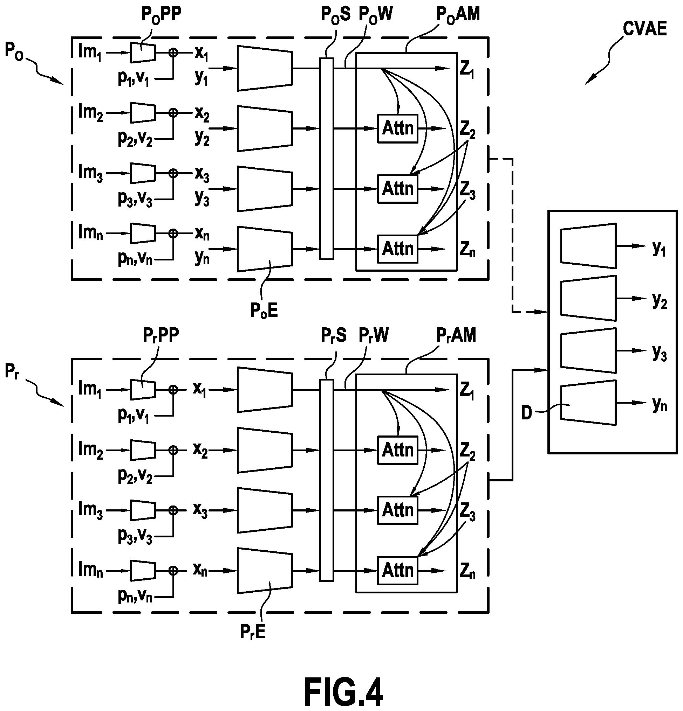

The structure of the prediction systems PS is illustrated by Fig.1, an exemplary scene S in which they are operated in shown on Fig.2. The functional architectures of respectively a first and a second embodiment of some of these prediction systems are illustrated respectively by Fig.3 and Fig.4.

Wherever possible, the same reference signs will be used throughout the figures to refer to the same or like parts or components.

The function of the prediction system PS is to calculate predictions (e.g., information) relative to future property(ies) of agent(s) present in a scene. These agents can for instance be any mobile elements (typically vehicles, pedestrians, bicyclists, animals, etc.) present in the scene: In the present example, the agents include a vehicle A1 on which the prediction system PS is mounted, two pedestrians A2 and A3, and other non-shown agents (Fig.2).

Hereinafter, the total number of agents is noted n. This number may be fixed, or is preferably adjusted over time depending for instance on the number of agents detected in the scene.

On Fig.1, a prediction system PS is presented in operation, mounted on a vehicle A1. The vehicle A1 is a car, which represents a non-limiting example of a vehicle on which a prediction system according to the present disclosure can be mounted. Although the present invention is disclosed implemented on a vehicle, it can also be implemented in a robot, a stationary system, etc.

The prediction system PS is a part of an advanced driver assistance system ADAS of vehicle A1, configured to help the driver drive vehicle A1 and/or to control vehicle A1.

The functions of the ADAS system are implemented on a central driving computer 110 ("computer 110'). Computer 110 comprises a non-transitory storage medium 111 and one or more processor(s) 112. The one or more processors 112 are intended to be representative of the presence of any one or more processors or processing devices, of any of a variety of forms. In addition, although computer 110 is represented on Fig.1 in a single box, it may be a distributed calculation system, comprising a plurality of processors, possibly physically arranged on different locations.

The ADAS system further comprises a set of sensors 120, each sensor being connected to computer 110, a set of actuators 130, and various other components. The set of sensors 120 comprises in particular sensors configured to perceive an external environment of car 1. In this purpose, it comprises cameras 122, radars 124 and lidars 126. One of these sensors 120, only a front camera 122, two front radars 124 and a roof-mounted lidar 126 are represented on Fig.1.

The data outputted by the sensors 120 are transmitted in real time to computer 110.

A scene S in which vehicle A1 is moving is illustrated by Fig.2.

As shown on Fig.2, vehicle A1 at the considered time step is reaching a cross-road. Two pedestrians A1 and A2 (examples of agents, in addition to the vehicle A1) are walking on the road. The past observations relative to the pedestrians are noted x2 and x3, while the past observation relative to the vehicle is noted x1.

At each time step (for instance, each 20 ms), on the basis of the data acquired by sensors 120, the ADAS system calculates the past observation X relative to the agents present in the scene, and transmits the calculated past observation X to the prediction system PS. On this basis, prediction system PS calculates a prediction Y for the agents (for vehicle A1, but also in particular for the pedestrians A2 and A3). This prediction is transmitted back to the ADAS system, which uses this information to perform various functions. The calculated prediction Y may also be transmitted to other entities, for instance other vehicles present in the scene (V2V), to infrastructure-mounted systems (V2I), etc.

The functions (the functional units) of the prediction system PS are implemented on the computer 110. As explained before, the prediction system PS essentially comprises a convolutional variational autoencoder or CVAE. The CVAE is not only implemented on computer 110, but is also trained on computer 110.

A computer program P1 comprising instructions which, when they are executed by the processor(s) 112, cause these processor(s) to carry out the steps of one of the above-defined training methods, and a computer program P2 comprising instructions which, when they are executed by the processor(s) 112, cause these processor(s) to carry out the steps of the above-defined prediction methods, are stored in storage medium 111. These programs, and the storage medium 111, are examples respectively of a computer program and a computer-readable recording medium according to the present disclosure.

The memory 111 of the computer 110 indeed constitutes a recording medium according to the invention, readable by the one or more processor(s) 112 and on which these programs are recorded.

In alternative embodiments, instead of being mounted on a vehicle, system 100 can be stationary. It can be for instance a stationary system (e.g., a system 'in the cloud'), connected to a detection system placed at a crossroad which detects the agents present at the cross-road and outputs the past information relative to these agents to the prediction system. On this basis, the prediction system can then calculate predictions relative to the mobile objects detected at the crossroad.

Fig. 3 is a schematic representation of a conditional variational autoencoder CVAE according to a first embodiment of the present disclosure.

The function of the CVAE is to generate, at a time step, plausible predictions for the n agents detected in the scene (actually, n is a time-varying number n(t)). These predictions can be in particular future trajectories of these agents.

The CVAE has the general architecture of a conditional variational auto-encoder and comprises a prior Pr, a posterior Po and a decoder D.

The posterior is used only during the training phase of the CVAE, during which its parameters $\phi$, as well as the parameters $\theta$ of the prior and those D of the decoder D are determined. Then, during inference, that is, when the CVAE is used to calculate predictions, the predictions are calculated, using only the prior Pr and the decoder D.

The posterior Po comprises the first encoder PoE, the first sampler PoS and the first attention mechanism PoAM and is configured to output a value of a latent space variable Z, such that the latent space variable Z exhibits a posterior distribution $q_\phi(Z|X,Y)$ conditioned by the past observation X and the prediction Y. The parameters $\phi$ of the posterior Po are part of the first encoder PoE and of the first attention mechanism PoAM.

The conditional distribution $q_\phi(Z|X,Y)$ may be chosen as a multivariate normal distribution with mean $\mu_\phi(X,Y)$ and covariance $\sigma_\phi(X,Y)$. Consequently, in this case $q_\phi(Z|X,Y)$ can be expressed as:

$$q_\phi(Z|X,Y) = N\left(\mu_\phi(X,Y), \sigma_\phi(X,Y)\right)$$

In this expression, the mean $\mu_\phi(X,Y)$ and the covariance $\sigma_\phi(X,Y)$ are determined (output) by the encoder E, and $N$ denotes the normal distribution.

In this case, the conditional distributions $q_\phi(z_n|Z_{<n},X,Y)$ corresponding to agent Ai are normal distributions whose mean and variances are functions of $Z_{<i}$, X and Y. Intuitively, given the past trajectories of the agents $\{1, ... , n\}$ and the joint latent posterior distribution over the interacting agents $\{1, ... , i\}$, the latent posterior distribution corresponding to agent Ai encoding its interactions can be inferred conditioned on the latent information of the interacting agents $\{1, ..., i - 1\}$.

The first encoder PoE is configured to receive the past observation X regarding agent(s) A and a prediction as an input, and to output the parameters of the distribution of the first intermediate variable PoW. Accordingly, the role of the first encoder PoE can be seen as recording the history of the different agents by outputting a representation of the past observation X, through the parameters of that distribution.

The first encoder PoE may be a recurrent neural network, for instance a LSTM module.

Note, on Fig.3, an encoder PoE is represented for each input (xi,yi). Preferably (but not necessarily) the same encoder PoE actually is used to process the inputs (xi,yi) for all values of i, that is, for all agents A.

Conversely, in other embodiments, a plurality of first encoders PoE may be used. For instance, the past observations may include information regarding a class of the agent (e.g. pedestrians, bicyclists, cars, trucks, etc.), and a specific first encoder is provided for each class of agents.

The first sampler PoS is provided to calculate (or draw) a value of the first random intermediate variable PoW. This value is calculated so that successive values of the first random variable PoW outputted by the first sampler exhibit the probability distribution having the parameters output by the first encoder PoE.

During training, backpropagation can be performed for instance using the so-called reparametrization trick disclosed by Ref.[3].

The first attention mechanism PoAM is implemented in the posterior Po to model the dependence of the distribution of zi on $Z_{<i}$, X and Y.

Based on a value of the first intermediate variable PoW drawn by the first sampler PoS, the first attention mechanism PoAM calculates a value of the latent space variable Z.

The first attention mechanism PoAM is configured to calculate successively the values zi of the latent space variable Z. At each loop (for each value of the index i, i varying from 1 to n), X, Y and the previously calculated values $Z_{<i}$ are inputted to the attention mechanism PoAM, which outputs zi on this basis.

In some embodiments, the attention mechanism PoAM is modeled using fully connected layers with 64 hidden units.

The past observations X input to the CVAE may include additional features, for instance visual features. These additional features of the past observations may be based on additional inputs, such as camera images and/or lidar point clouds.

For instance, a camera image representing a considered agent Ai and a bird eye view rendering of a lidar point cloud, both centered on a considered agent Ai, may constitute additional inputs. These additional inputs may be used to obtain additional features, these additional features being included in the past observations X for the agents A.

In some embodiments, one or more dedicated neural network(s) is used to pre-process the additional input(s) so as to calculate the additional feature(s) to be included in the past observations X.

The second embodiment of the present disclosure shown on Fig.4 is an example of such embodiment. Unless specified otherwise, the features of the second embodiment are identical to the features of the first embodiment.

In this second embodiment, the additional inputs are images $(I_i)$ = $(Im_1, Im_2, .. Im_n)$ of the scene. For each agent Ai, the corresponding image $(Im_i)$ is an image of the scene which shows the agent Ai.

In these embodiments, each of the posterior and the prior comprises pre-processor(s) (respectively PoPP and PrPP), for each agent, to pre-process the additional input(s). The pre-processor(s) may be neural network(s); it or they can be for instance VGG16-like neural network(s) (VGG neural networks are described by Ref.[7]).

In some embodiments, for a considered type of additional input (and like for the encoder(s) PoE and/or PrE), the same pre-processor PoPP, or respectively PrPP, is used, which processes the considered additional input (for instance, an image of the agent), for all the agents.

In other embodiments conversely, for a considered type of additional input, a plurality of pre-processors PoPP or PrPP are used, so as to apply different pre-processings to different types of agents.

The per-agent features output by the pre-processors PoPP and PrPP, respectively for the posterior and for the prior, are included (for instance, by concatenation) to the past observations X.

For instance, in the exemplary second embodiment as shown on Fig.4, for each agent Ai the per-agent features output for agent Ai by the pre-processor (PoPP or PrPP) are concatenated with the past position (pi) and the past velocity (vi) for agent Ai; the so-concatenated data constitute the past observation xi, which is then inputted to the posterior encoder PoE or respectively to the prior encoder PrE. In the case of the posterior encoder PoE, the prediction Y ($Y_{actual}$, during training) is also inputted to the posterior encoder PoE.

Using additional inputs increases the performance of the CVAE. For instance, when the methods or systems of the present disclosure are operated in an urban environment, camera images (Im) or bird eye view lidar-based renderings of the scene provide important contextual information (e.g. the presence of physical obstacles in the vicinity of the agent), which can have a significant impact on the trajectory of the considered agent.

Advantageously, the neural network (in the example above, the VGG16-like neural network) used to pre-process the additional inputs can be trained together with the CVAE.

The prior Pr comprises the second encoder PrE, the second sampler PrS and the second attention mechanism PrAM.

The second encoder PrE is configured, based on a past observation X, to calculate parameters of a distribution of a second intermediate variable PrW conditioned by the past observation X.

The prior Pr is configured so that the latent space variable Z exhibits a prior distribution $p_\theta(Z|X)$ conditioned by the past observation X and the prediction Y.

This prior distribution $p_\theta(Z|X)$ decomposes as a product of agentrelated prior distributions $p_\theta(z_i|Z_{<i}, Y_{<i}, X)$ based on the equation:

$$p_\theta \left( Z \mid X \right) = \prod_i^n p_\theta \left( z_i \mid Z_{<i}, Y_{<i}, X \right)$$

where $p_\theta(z_i|Z_{<i}, Y_{<i}, X)$ is a probabilistic distribution of the latent space variable $z_i$, conditioned by the latent space variables $Z_{<i}$, the predictions $Y_{<i}$, and the past observation X.

This expression indeed has proved to be sufficient for the latent space to efficiently capture the interactions between the agents.

The above equation makes it possible to calculate the distribution of a prediction Y across all agents Ai using the latent variable Z as follows:

$$p_\theta(Y \mid X) = \int p_\theta(Y, Z \mid X)\, dZ$$

$$= \int \prod_i^n p_\theta(y_i, z_i \mid Z_{<i}, Y_{<i}, X)\, dZ$$

$$= \int \prod_i^n p_\theta(y_i \mid Z_{\leq i}, Y_{<i}, X)\, p_\theta(z_i \mid Z_{<i}, Y_{<i}, X)\, dZ$$

In the second step above, without loss of generality, the joint distribution is auto-regressively factorized over the n agents. In these expressions, $Z_{\leq i}$ and $Y_{<i}$ denote the latent variables and prediction for agents $\{1, ..., i - 1\}$. Importantly, the factorization is agnostic to the choice of ordering of the agents. In addition, the prior distribution of the latent variables in the above equation exhibits joint modeling of the latent variables $z_i$, i.e. $p_\theta(z_i \mid Z_{<i}, Y_{<i}, X)$.

In the above equation, the term $p_\theta(z_i \mid Z_{<i}, Y_{<i}, X)$ which represents the function performed by the decoder, encodes the effect of interactions on the latent space of agent i through the dependence on $Z_{<i}, X$.

In the present embodiment, the distribution $p_\theta(Z \mid X)$ is parameterized as a conditional normal distributions, where the mean and variance depends on $Z_{<i}$ and X.

The decoder Di is essentially implemented by recurrent neural network. For instance, it can be implemented by an LSTM with 128 hidden units.

The CVAE is trained by iteratively training the prior Pr, the posterior Po and the decoder D. More precisely, the CVAE is trained using gradient descent to optimize the loss with respect to the parameters $\theta$, $\phi$ and D of the prior, the posterior and the decoder.

Besides, it has been found that the usual log Evidence Lower BOund (ELBO) often used to train CVAEs may experience various issues, e.g. posterior collapse. Consequently, in accordance with the present disclosure, the loss function is preferably modified to include the hyperparameter $\beta$ for the ELBO proposed by Ref.[2]. This formulation of the loss function indeed has been found to improve the representational capacity of the latent space and to capture more accurately the effect of interactions between agents, in particular in dense urban environments.

Accordingly, with the factorized formulation of the posterior distribution $q_\phi(Z \mid X, Y)$ and the joint prior distribution $p_\phi(z_i \mid Z_{<i}, Y_{<i}, X)$, the loss function L is preferably based on the difference L1 below:

$$L1 = \sum_i E_{q\Phi}\, log(\, p_\theta(y_i \mid Z_{\leq i}, Y_{<i}, X)\, ) - \beta \sum_i D_{KL}(\, q_\Phi(z_i \mid Z_{<i}, X, Y)\ \|\ p_\theta(z_i \mid Z_{<i}, X)\, )$$

where $D_{KL}$ represents here the Kullback-Leibler divergence.

In this equation, the values of the $\beta$ parameter can be found by usual hyperparameter tuning methods (e.g. grid search, etc.).

Moreover, in practice it has been found sufficient to condition the decoder $p_\theta(y_i \mid Z_{\leq i}, Y_{<i}, X)$ only on $\{Z_{\leq i}, X\}$, without any dependency on Y.

Indeed, the rich latent space of the CVAE already models the effect of interactions, making it unnecessary to additionally condition $p_\theta$ on $Y_{<i}$ to improve the performance.

To train the CVAE, a training dataset may be prepared. This dataset comprises, for a certain number of past time steps, not only past observations $X_{actual}$ for these time steps, but also predictions $Y_{actual}$ for these time steps. For each one of these time steps, the past observation $X_{actual}$ is the past observation X at the considered time steps, which represents the behaviour of the different agent(s) at one or more time steps before the considered time step (including substantially at the time of the time step); the prediction $Y_{actual}$ on the other hand represents the behaviour of the different agent(s) which actually took place at one or more time steps after the considered time step; that is, at the 'future time step(s)', relative to the considered time step.

During training, the data of the training dataset are used: The past observations $X_{actual}$ and the predictions $Y_{actual}$ are used as inputs of the CVAE; the predictions $Y_{actual}$ are used as ground truth.

In operation, in order to estimate a prediction, the prior Pr and the decoder D are used as follows.

A past observation X is input to the encoder PrE of the prior Pr. Based on this past observation X, the encoder PrE calculates the parameters of a distribution of the second intermediate variable PrW.

The second sampler PrS then draws a value of the second intermediate variable PrW, based on the parameters of the distribution of the second intermediate variable PrW.

The second attention mechanism PrAM then calculates a value of the latent space variable Z based on the drawn value of the second intermediate variable PrW.

Finally, the decoder D calculates the prediction Y based on said value of the latent space variable Z.

Throughout the description, including the claims, the term "comprising a" should be understood as being synonymous with "comprising at least one" unless otherwise stated.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

**Claims**

1. A training method for training a conditional variational auto-encoder model CVAE to calculate a prediction Y relative to future property(ies) of agent(s) (Ai) present in a scene (S), with i=1...n, the CVAE comprising a posterior (Po), a prior (Pr) and a decoder (D);

   the posterior comprising a first encoder (PoE), a first sampler (PoS) and a first attention mechanism (PoAM);

   the first encoder (PoE) being configured, based on a past observation X and a prediction Y, to calculate parameters of a distribution of a first intermediate variable (PoW) conditioned by the past observation X and the prediction Y;

   the first sampler (PoS) being configured to draw a value of the first intermediate variable (PoW), based on the parameters of the distribution of the first intermediate variable (PoW) calculated by the first encoder (PoE);

   the first attention mechanism (PoAM) being configured to output a value of the latent space variable Z based on the drawn value of the first intermediate variable (PoW);

   the posterior (Po) being configured so that the latent space variable Z exhibits a posterior distribution $q_\phi(Z|X,Y)$ conditioned by the past observation X and the prediction Y;

   the prior (Pr) comprising a second encoder (PrE), a second sampler (PrS) and a second attention mechanism (PrAM);

   the second encoder (PrE) being configured, based on a past observation X, to calculate parameters of a distribution of a second intermediate variable (PrW) conditioned by the past observation X;

   the second sampler (PrS) being configured to draw a value of the second intermediate variable (PrW), based on the parameters of the distribution of the second intermediate variable (PrW) calculated by the second encoder (PrE);

   the second attention mechanism (PrAM) being configured to output a value of the latent space variable Z based on the drawn value of the second intermediate variable (PrW);

   the prior (Pr) being configured so that the latent space variable Z exhibits a prior distribution $p_\theta(Z|X)$ conditioned by the past observation X and the prediction Y;

   the decoder (D) being configured to calculate a prediction Y based on a value of the latent space variable Z;

   said past information X including at least past property(ies) of the agent(s) at past time point(s);

   said prediction Y including at least one property (pi,vi) of agent(s) at future time point(s);

   the method comprising iteratively training the posterior (Po), the prior (Pr) and the decoder (D); wherein

   the past observation X, the prediction Y and the latent space variable Z are respectively vectors (xi),(yi),(zi) of per-agent value(s), indexed by i;

   the posterior distribution $q_\phi(Z|X,Y)$ decomposes as a product of per-agent distributions $q_\phi(zi|Z_{<i},X,Y)$ based on the equation:

$$q_\Phi(Z|X,Y) = \prod_{i=1}^{n} q_\Phi(z_i | Z_{<i}, Y, X) \quad (1)$$

   where $q_\phi(zi|Z_{<i},Y,X)$ is a probabilistic distribution of the latent space variable zi related to agent Ai, conditioned by the latent space variables $Z_{<i}$, the prediction Y, and the past observation X;

   the notation $U_{<i}$, where U can be X, Y or Z, and U=(ui), denoting the values uj for j=1... i-1;

   the prior distribution $p_\theta(Z|X)$ decomposes as a product of per-agent prior distributions $p_\theta(zi|Z_{<i},Y_{<i},X)$ based on the equation:

$$p_\theta(Z|X) = \prod_{i=1}^{n} p_\theta(z_i | Z_{<i}, Y_{<i}, X) \quad (2)$$

   where $p_\theta(zi|Z_{<i},Y_{<i},X)$ is a probabilistic distribution of the latent space variable zi related to agent Ai, conditioned by the latent space variables $Z_{<i}$, the predictions $Y_{<i}$, and the past observation X; and
each of the attention mechanisms (AM1,AM2) is configured to infer the per-agent value(s) zi of the latent space variable Z based on the per-agent latent space variable(s) $Z_{<i}$ and the drawn value of an intermediate variable (PoW,PrW) transmitted to the attention mechanism.

2. The training method according to claim 1, wherein the training is performed so as to maximize a loss function (L) which maximizes a likelihood of training data ($Y_{actual}$) under parameters of the CVAE ($\theta,\phi$,D) while minimizing term(s) representative of a divergence between the prior distribution $p_\theta(Y,Z|X)$ and the posterior distribution $q_\phi(Z|X,Y)$.

3. The training method according to claim 2, wherein the loss function (L) includes a difference L1 defined by:

$$L1 = \sum_i E_{q\Phi} \left( log \left( p_{\theta,D} \left( y_i | Z_{\leq i}, Y_{<i}, X \right) \right) \right) - \beta \sum_i D_{KL} \left( q_\Phi \left( z_i | Z_{<i}, X, Y \right) \| \right.$$

$$\left. p_\theta \left( z_i | Z_{<i}, X \right) \right)$$

where $E_{q\phi}$ is the expected value.

4. The training method according to any one of claims 1 to 3, in which the posterior (Po) is configured so that the per-agent posterior distributions $q_\phi(zi|Z_{<i},Y,X)$ are normal distributions whose mean and variances are functions of $Z_{<i}$, X and Y.

5. The training method according to any one of claims 1 to 4, in which the CVAE is configured so that none of the per-agent prior distributions $p_\theta(zi|X)$ is conditioned on any prediction value $y_i$.

6. The training method according to any one of claims 1 to 5, in which the encoder(s) (PoE,PrE) and/or the decoder (D) include(s) recurrent neural network(s), the recurrent neural network(s) being for instance a gated recurrent unit (GRU) or a Long-Short-Term Memory module (LSTM).

7. The training method according to any one of claims 1 to 6, in which the posterior distribution $q_\phi(Z|X,Y)$ and the prior distribution $p_\theta(Z|X)$ are configured so that the latent space variable Z is a Gaussian variable.

8. A prediction method for calculating a prediction Y relative to future property(ies) of agent(s) Ai present in a scene (S), with i=1...n, the method comprising:

storing, in a memory, a prior (Pr) and a decoder (D) of a prediction model CVAE trained with a method according to any one of claims 1 to 7;
inputting a past observation X to the prior (Pr);
based on the past observation X, calculating parameters of a distribution of the second intermediate variable (PrW), using the encoder (PrE) of the prior (Pr);
drawing a value of the second intermediate variable (PrW), based on the parameters of the distribution of the second intermediate variable (PrW);
calculating a value of the latent space variable Z based on the drawn value of the second intermediate variable (PrW), using the attention mechanism (PrAM) of the prior (Pr);
calculating the prediction Y based on said value of the latent space variable Z, using the decoder D.

9. One or more computer program(s) comprising instructions which, when the instructions are executed by a computer, cause the computer to carry out the steps of a training method according to any one of claims 1 to 7 or a prediction method according to claim 8.

10. A non-transitory computer readable medium, having the one or more computer program(s) according to claim 9 stored thereon.

11. A prediction system for calculating a prediction (Y) relative to future property(ies) of agent(s) Ai present in a scene (S), with i=1...n; the prediction system comprising one or more processors and a computer-readable medium; the computer-readable medium comprising computer instructions stored therein, wherein the instructions, when executed by the one or more processors, cause the one or more processors to carry out the steps of a prediction method according to claim 8.

EP 4 099 226 A1

FIG.1

FIG.2

FIG.3

**FIG.4**

Europäisches
Patentamt

European
Patent Office

Office européen
des brevets

**EUROPEAN SEARCH REPORT**

Application Number

EP 21 17 6983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YE YUAN ET AL: "AgentFormer: Agent-Aware Transformers for Socio-Temporal Multi-Agent Forecasting", ARXIV.ORG, CORNELL UNIVERSITY LIBRARY, 201 OLIN LIBRARY CORNELL UNIVERSITY ITHACA, NY 14853, 25 March 2021 (2021-03-25), XP081916860, * section 3 * * figures 1, 3 * * page 13, second paragraph * ----- | 1-11 | INV. G06N3/04 G06N3/08 ADD. B60W60/00 |

| | | | TECHNICAL FIELDS SEARCHED (IPC) |
|---|---|---|---|
| | | | G06N B60W |

The present search report has been drawn up for all claims

| Place of search | Date of completion of the search | Examiner |
|---|---|---|
| The Hague | 9 November 2021 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ALAHI ; K. GOEL ; V. RAMANATHAN ; A. ROBICQUET ; L. FEI-FEI ; S. SAVARESE.** Social LSTM: Human trajectory prediction in crowded spaces. *Proceedings of the IEEE Conference on Computer Vision and Pattern Recognition,* 2016, 961-971
- **IRINA HIGGINS ; LOÏC MATTHEY ; ARKA PAL ; CHRISTOPHER BURGESS ; XAVIER GLOROT ; MATTHEW BOTVINICK ; SHAKIR MOHAMED ; ALEXANDER LERCHNER.** Beta-VAE: Learning basic visual concepts with a constrained variational framework. *ICLR,* 2017
- **DIEDERIK P ; KINGMA ; MAX WELLING.** Auto-encoding variational Bayes. *ICLR,* 2014
- **N. LEE ; W. CHOI ; P. VERNAZA ; C. B. CHOY ; P. H. TORR ; M. CHANDRAKER.** Desire: Distant future prediction in dynamic scenes with interacting agents. *CVPR,* 2017
- **TIM SALZMANN ; BORIS IVANOVIC ; PUNARJAY CHAKRAVARTY ; MARCO PAVONE.** Trajectron++: Multi-agent generative trajectory forecasting with heterogeneous data for control. *ECCV,* 2020
- **K. SOHN ; H. LEE ; X. YAN.** Learning structured output representation using deep conditional generative models. *Advances in Neural Information Processing Systems,* 2015, 3483-3491
- **KAREN SIMONYAN ; ANDREW ZISSERMAN.** Very deep convolutional networks for large-scale image recognition. *ICLR,* 2015
- **ANEJA, J. ; AGRAWAL, H. ; BATRA, D. ; SCHWING, A.** Sequential Latent Spaces for Modeling the Intention During Diverse Image Captioning. *IEEE/CVF International Conference on Computer Vision (ICCV),* 2019, 4260-4269